# EUROPEAN PATENT APPLICATION

(11) **EP 3 381 561 A1**
(43) Date of publication of application: **03.10.2018**
(21) Application number: 18161461.1
(22) Date of filing: 13.03.2018
(51) Int. Cl.: B01L 3/02

(54) **MOBILE TERMINAL DEVICE AND COMPUTER PROGRAM**

(30) Priority: 28.03.2017 JP 2017062185
(71) Applicant: Icomes Lab Co., Ltd., Iwate 020-0857 (JP)
(72) Inventor: Katano, Keiji, Iwate, 020-0857 (JP); Kamiyama, Tadataka, Iwate, 020-0857 (JP); Odashima, Naoyuki, Iwate, 020-0857 (JP)
(74) Representative: Hoffmann Eitle

(57) **Abstract**

A mobile terminal device (2) includes: a display operation unit (2b) configured to display, simultaneously on a screen, a setting including a dispense volume setting of a dispensing device (1) for aspirating and dispensing fluid by driving of an actuator (30), and a numeric key pad (K2) for entering the setting; a second wireless communicating unit (2c) configured to transmit information on the setting to a first wireless communicating unit (70) included in the dispensing device (1); and a control unit (2a) configured to control the display operation unit (2b) and the second wireless communicating unit (2c).

## Description

### BACKGROUND OF THE INVENTION

The present invention relates to a mobile terminal device and a computer program.

Having been known is a dispensing device that aspirates and dispenses a fluid through a nozzle provided at the tip, by driving an output shaft about a shaft center using a motor, to move a piston back and forth inside of a syringe in the axial direction of the piston. The dispensing device disclosed in PCT International Publication No. 2016/080411, for example, includes a wireless communication unit capable of performing wireless communication with an external device. A pipetting system is then built using the dispensing device including the wireless communication unit, and a mobile terminal device, such as a smartphone, capable of performing wireless communication.

In a dispensing system such as a pipetting system, there has been some demands for improvements in the accuracy and the easiness of a dispensing process. According to an extensive study carried out by the inventors of the present invention, the process of setting the dispense volumes occupies a large proportion of the workload in the dispensing process, and the inventors have discovered that improvements in the workability and the efficiency of the process of dispense volume setting contributes largely to the improvements in the accuracy and the easiness of the dispensing process.

The present invention is made in consideration of the above, an object of the present invention is to provide a mobile terminal device and a computer program that improves the accuracy and the easiness of the dispensing process at the same time.

### SUMMARY OF THE INVENTION

It is an object of the present invention to at least partially solve the problems in the conventional technology.

A mobile terminal device according to one aspect of the present invention includes: a display operation unit configured to display, simultaneously on a screen, a setting including a dispense volume setting of a dispensing device for aspirating and dispensing fluid by driving of an actuator, and a numeric key pad for entering the setting; a second wireless communicating unit configured to transmit information on the setting to a first wireless communicating unit included in the dispensing device; and a control unit configured to control the display operation unit and the second wireless communicating unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic diagram of a configuration of a dispensing system;
FIG. 2 is a schematic diagram of a configuration of a dispensing device;
FIG. 3 is a schematic for explaining an internal structure of the dispensing device;
FIG. 4 is a block diagram of the dispensing system;
FIG. 5 is a schematic for explaining how the dispensing device is used;
FIG. 6 is a schematic for explaining a display screen of a mobile terminal device in a setting input mode;
FIG. 7 is a flowchart for explaining control in the setting input mode; and
FIG. 8 is a schematic for explaining a display screen of the mobile terminal device in a history information editing mode.

### DETAILED DESCRIPTION OF THE PREFERRED EMBODIMENTS

An embodiment of the present invention will now be explained in detail with reference to the accompanying drawings. The following embodiment is not intended to limit the scope of the present invention in any way. In the drawings, the same or corresponding elements are assigned with the same reference numerals as appropriate, and redundant explanations will be omitted as appropriate.

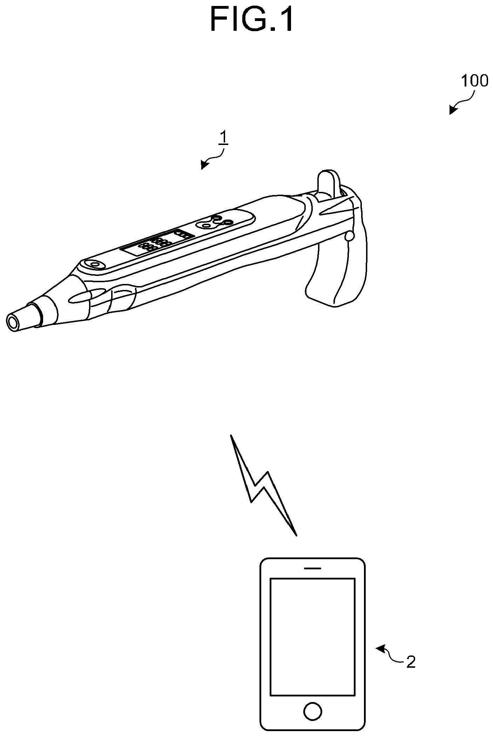

FIG. 1 is a schematic diagram of a configuration of a dispensing system including a mobile terminal device according to the embodiment. This dispensing system 100 includes a dispensing device 1 and a mobile terminal device 2.

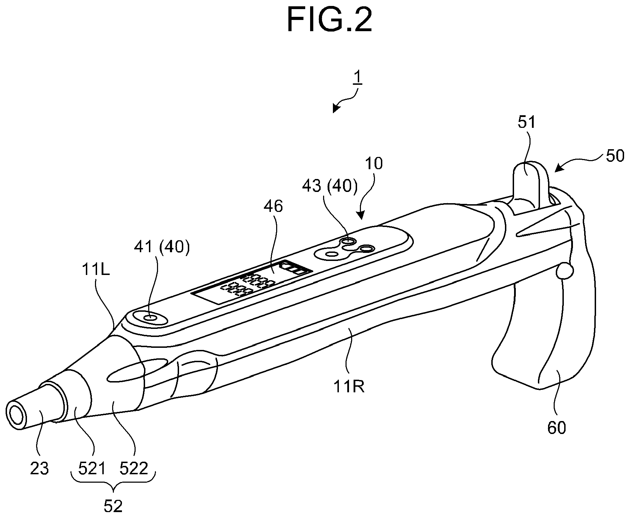

FIG. 2 is a schematic diagram of a configuration of the dispensing device 1, and is a perspective view illustrating the dispensing device 1 viewed from the tip-end side. The dispensing device 1, which is illustrated as an example, is for aspirating and dispensing a fluid such as a reagent or a specimen and is provided with a device main body 10. The device main body 10 is a housing internal of which has a housing space that is formed by coupling a pair of right-and-left-side covers 11L, 11R. These side covers 11L, 11R have a long shape, having the front-and-back direction thereof corresponding to the longitudinal direction. Therefore, the device main body 10 has a total length that is longer than the total width.

The dispensing device 1 includes a finger rest 60 that is provided on the side of the base end of the device main body 10. The finger rest 60 extends in a direction intersecting with the longitudinal direction of the device main body 10, and has an internal housing space. In the embodiment, the tip-end side of the finger rest 60 is curved gently along a direction toward the tip end of the dispensing device 1.

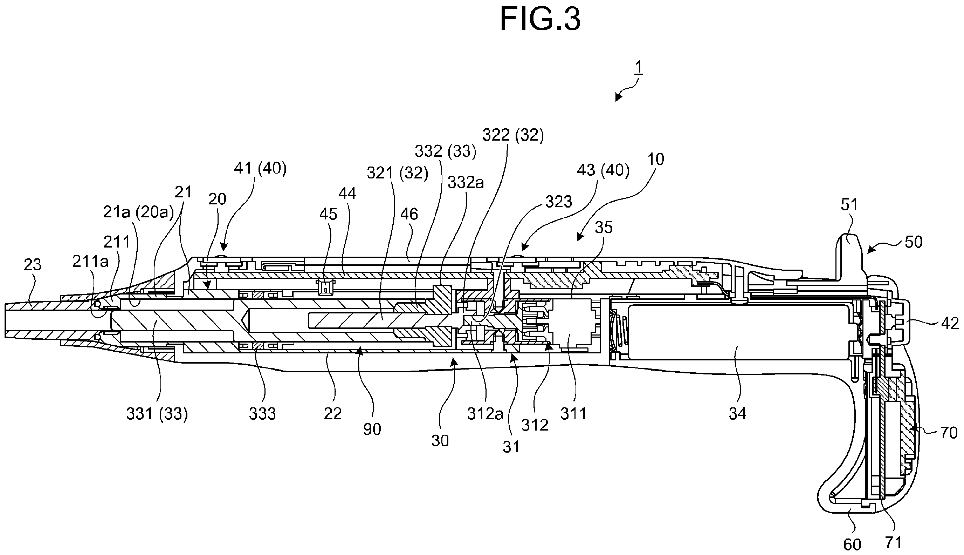

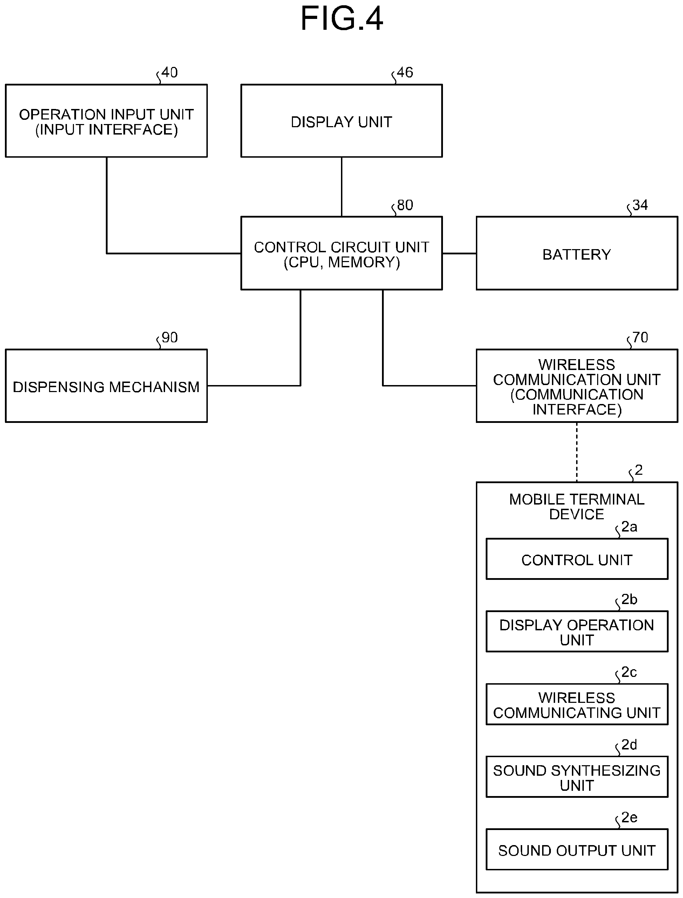

FIG. 3 is a schematic for explaining an internal structure of the dispensing device 1. FIG. 4 is a block diagram of the dispensing system 100. A dispensing mechanism 90, an operation input unit (operation input portion, input interface) 40, an ejecting mechanism 50, and a wireless communication unit 70 serving as a first wireless communicating unit are provided inside of the device main body 10 and the finger rest 60. The dispensing mechanism 90 includes a syringe 20 and an actuator unit 30.

The syringe 20 has a syringe tip-end unit 21 and a syringe base-end unit 22, and a syringe hollow 20a is formed between the syringe 20 and a piston 33, which is to be described later. A tip-end hollow 21a having a columnar shape is provided inside of the syringe tip-end unit 21, and the syringe tip-end unit 21 has a tapered shape with a tip-end area 211 thereof gradually getting smaller toward the tip end.

The tip-end surface of the syringe tip-end unit 21 has a circular attaching opening 211a, and the attaching opening 211a is communicatively connected to the tip-end hollow 21a. A nozzle 23 is then attached to the tip-end surface of the syringe tip-end unit 21, so that the attaching opening 211a is closed thereby.

The syringe 20 is provided so that a tip-side opening of the device main body 10 is closed by attaching the syringe tip-end unit 21 to the side covers 11L, 11R, while the syringe base-end unit 22 is inserted in the housing space of the device main body 10. The tip-end area 211 of the syringe tip-end unit 21 is exposed from the device main body 10.

The actuator unit 30 includes a rotating actuator 31, an output shaft 32, and a piston 33. The rotating actuator 31 includes an electric motor 311 and a reducer 312. The electric motor 311 serves as a driving source of the rotating actuator 31, and driving of the electric motor 311 is controlled by the power supplied from a battery 34 or the like housed in the base-end side of the housing space of the device main body 10, and by a command sent from a control circuit unit 80 serving as a first control unit, which is to be described later. The electric motor 311 can freely change the rotating direction by changing the direction of the current applied.

An actuator case 35 has a substantially cylindrical shape, and extends in a length that is sufficient for covering an outer circumferential area of a driving shaft 312a that makes up a tip-end unit of the reducer 312. This actuator case 35 covers the outer circumference of the reducer 312 in such a manner that the central axis of the actuator case 35 is matched with the central axis of the driving shaft 312a.

The output shaft 32 has a columnar output base portion 321 having an outer circumferential surface provided with a screwed groove, and an output base end 322 that is provided in a manner continuous to the base-end side of the output base portion 321. The output base end 322 has a larger diameter than that of the output base portion 321, and a part of the output base end 322 is split into two in such a manner that the surfaces facing each other are flat, and an output recess portion 323 is formed thereby.

The piston 33 includes a piston main body 331 and a nut 332. The piston main body 331 has a substantially cylindrical shape, with a tip end thereof closed, and the outer diameter of the piston main body 331 is slightly smaller than the internal diameter of the tip-end hollow 21a of the syringe hollow 20a. A seal 333 made of an elastic material is provided around the outer circumference of the tip-end side of the piston main body 331. The size of the inner diameter of the piston main body 331 is slightly larger than the outer diameter of the output shaft 32, that is, slightly larger than the outer diameter of the output base portion 321 of the output shaft 32. The outer diameter of the piston main body 331 on the tip-end side is slightly smaller than the inner diameter of the attaching opening 211a of the syringe 20 and that of the nozzle 23. The piston 33 is also constantly kept biased by biasing means such as a spring, not illustrated, in a direction toward the base end.

The nut 332 is attached to the base end of the piston main body 331 and is made of a resin material, for example. The internal circumferential surface of the nut 332 is provided with a screwed groove, and is disposed on the output shaft 32 in such a manner that this screwed groove is screwed onto the screwed groove of the output shaft 32. A protruding piece 332a extending in a radially outward direction is provided to the outer circumferential direction of the nut 332.

The operation input unit 40 is for allowing an operator (user) to make operation inputs, and includes a first push button (tip-end-side push button) 41, a second push button (base-end-side push button) 42, and an operation button 43.

The first push button 41 is provided near the tip end of the device main body 10, and the head of the first push button 41 is exposed from the device main body 10. When this first push button 41 is pressed down, a switch provided to one surface of a control circuit board 44 (the top surface in FIG. 2) is caused to turn ON. In the embodiment, the surface of the control circuit board 44 facing the side provided with the first push button 41 is referred to as one surface (top surface), and the surface facing the opposite side of the surface provided with the first push button 41 is referred to as the other surface (bottom surface).

The control circuit board 44 is housed in the housing space inside of the device main body 10, and the control circuit unit 80 for controlling the operations of the dispensing device 1, including the operations of the wireless communication unit 70 and driving of the rotating actuator 31, is mounted on the control circuit board 44.

The control circuit unit 80 includes a central processing unit (CPU) (operating unit) and a memory (storage unit), for example. The CPU is for performing information processing and device control in the dispensing device 1, and performs information processing and device control for the operation input unit 40, the wireless communication unit 70, and the dispensing mechanism 90, for example. The memory stores therein information received by the wireless communication unit 70, and information on operation history of the operation input unit 40 and the dispensing mechanism 90, for example. The operation history herein includes the time and date on which the first push button 41 or the second push button 42 is operated. Therefore, the control circuit unit 80 has a clock function. The operation history may also include a fluid aspiration volume and dispense volume (an aliquot dispense volume). Examples of the memory include a random access memory (RAM) and a rewritable read-only memory (ROM).

The second push button 42 is provided to the base end of the device main body 10, and the head of the second push button is exposed from the device main body 10. When this second push button 42 is pressed, an internal switch is caused to turn ON, and a signal indicating the switch being ON is sent to the control circuit unit 80.

The head of the operation button 43 is exposed from the top surface of the device main body 10, at a position nearer to the base end than the first push button 41. The operation button 43 includes a plurality of push buttons. When any one of the push buttons is pressed down, an input command assigned to the corresponding push button is sent to the control circuit unit 80. The push buttons included in the operation button 43 include a push button for incrementing a setting, a push button for decrementing a setting, and a push button for determining the setting, for example. A display unit 46 provided as a liquid crystal display device, for example, is provided to the top surface of the device main body 10, at a position between the operation button 43 and the first push button 41. This display unit 46 is for displaying various types of information in response to a command received from the control circuit unit 80.

The ejecting mechanism 50 includes an ejecting lever 51 and an ejector 52.

The ejector 52 includes a cylindrical portion 521 having an inner diameter larger than that of the nozzle 23, and a tapered portion 522 provided continuously to the base end of the cylindrical portion 521, and having an outer diameter and an inner diameter gradually becoming larger toward the base end.

The ejecting lever 51 is provided in a manner protruding outwards from the base-end-side opening of the side covers 11L, 11R that make up the device main body 10. This ejecting lever 51 is connected to the base end of an ejecting rod not illustrated.

The wireless communication unit 70 is provided on the side of the base end of the dispensing device 1, that is, inside of the finger rest 60. The wireless communication unit 70 is provided on a communication circuit board 71 that is housed in the finger rest 60, as illustrated in FIG. 3. This wireless communication unit 70 is for performing wireless communication between the control circuit unit 80 and the mobile terminal device 2. The wireless communication unit 70 is a communication interface for performing near-field wireless communication with the mobile terminal device 2, and is enabled to receive information (e.g., information on settings) from the mobile terminal device 2 using wireless communication, and to transmit information from the dispensing device 1 to the mobile terminal device 2 via the wireless communication. An example of the wireless communication unit 70 is a communication interface such as a Bluetooth (registered trademark) interface.

The communication circuit board 71 is connected to the control circuit board 44, via a flexible printed circuit (FPC) connector or a flexible cable, for example, and is enabled to communicate the information received by the wireless communication unit 70 to the side of the control circuit board 44. The communication circuit board 71 is also enabled to communicate the information from the control circuit board 44 to the side of the wireless communication unit 70, via the FPC connector or the flexible cable.

In the dispensing device 1, in the initial condition subsequent to the power-on, the piston 33 included in the actuator unit 30 is positioned at a reference position, and the protruding piece 332a of the nut 332 is positioned in a detectable area of a point-of-origin detecting sensor 45, which is on the side nearer to the tip end than the position illustrated in FIG. 3. Although not explicitly illustrated, a tip is attached to the nozzle 23, unless specified otherwise.

When the first push button 41 or the second push button 42 is pressed down while the piston 33 is positioned at the reference position, the control circuit unit 80 is caused to control the dispensing mechanism 90. Specifically, the control circuit unit 80 drives the electric motor 311 by feeding the power of the battery 34 and a driving command to the electric motor 311. The time for which the control circuit unit 80 drives the electric motor 311 is time sufficient to aspire the dose input via the operation button 43, for example, or sufficient to aspire the dose set in advance, by receiving a transmission from the mobile terminal device 2.

When the electric motor 311 is caused to drive in the manner described above, the output shaft 32 is caused to rotate about the shaft center. As the output shaft 32 is rotated with respect to the actuator case 35, the piston 33 provided with the nut 332, which is screwed onto the output shaft 32, is caused to move linearly toward the base end, along a direction of the shaft center of the output shaft 32, while receiving the biasing force of the biasing means. When the piston 33 moves linearly toward the base end, the pressure of the syringe hollow 20a in the syringe 20 becomes negative, and the fluid such as a chemical liquid is aspirated into the tip attached to the nozzle 23.

When the control circuit unit 80 stops driving the electric motor 311, the piston 33 becomes positioned at an advanced position that is the furthest position where the piston 33 can move toward the base end. When the operation button 43 is pressed down while the piston 33 is moved to the advanced position, the dispensing device 1 is set to a dispensing mode.

If the first push button 41 or the second push button 42 is pressed down while the dispensing device 1 is set to the dispensing mode, the control circuit unit 80 is caused to drive the electric motor 311 by sending a driving command to the electric motor 311. In the dispensing mode, the current is applied in a direction for rotating the rotating shaft of the electric motor 311 in the opposite direction at the time at which the fluid is aspirated. The time for which the control circuit unit 80 drives the electric motor 311 is time sufficient to dispense the dose input via the operation button 43, for example, or sufficient to dispense the dose set in advance, by receiving a transmission from the mobile terminal device 2, and is time in which a predetermined dose can be dispensed every time the first push button 41 or the second push button 42 is pressed once.

When the electric motor 311 is driven in the manner described above, the torque reduced as appropriate by the reducer 312 is communicated to the output shaft 32, and the output shaft 32 is caused to rotate about the shaft center with respect to the actuator case 35 (the syringe 20). When the output shaft 32 is rotated with respect to the actuator case 35, the piston 33 having the nut 332, which is screwed onto the output shaft 32, is caused to move linearly, by a predetermined amount, toward the tip end, in the direction of the shaft center of the output shaft 32, against the biasing force of the biasing means. As the piston 33 moves linearly toward the tip end, the fluid having been aspirated into the tip is dispensed.

The operation mode of the dispensing device 1 includes a single mode and a multi-mode. In the single mode, the dispensing device 1 dispenses the entire aspirated fluid in one dispense. In the multi-mode, the dispensing device 1 dispenses (aliquotly dispenses) the aspirated fluid over several times. In the multi-mode, every time the first push button 41 or the second push button 42 is pressed, the piston 33 is caused to move linearly by a predetermined amount toward the tip end, and the dispensing device 1 is caused to dispense a predetermined amount of fluid. When the protruding piece 332a of the nut 332 provided to the piston 33 then comes to be positioned in the detectable area of the point-of-origin detecting sensor 45, and the piston 33 comes to be positioned at the reference position, the dispensing operation is ended. In the single mode, by contrast, the dispensing operation is ended by pressing the first push button 41 or the second push button 42 once.

When the dispensing operation is ended, the control circuit unit 80 causes the wireless communication unit 70 to transmit the operation history information stored in the memory via a wireless signal. The timing at which the operation history information is transmitted is not limited thereto, and the wireless communication unit 70 may be set to transmit the information at different timing.

An operation for removing the tip attached to the nozzle 23 in the dispensing device 1 will now be explained. When the ejecting lever 51 is pushed toward the tip end, the ejecting lever 51 coupled via the ejecting rod (not illustrated) moves toward the tip end, against the biasing force of an ejection spring (not illustrated). This movement of the ejecting lever 51 causes the ejector 52 coupled to the ejecting lever 51 to move toward the tip end, relatively to the nozzle 23, and to push the tip attached to the nozzle 23. The tip can then be detached from the nozzle 23.

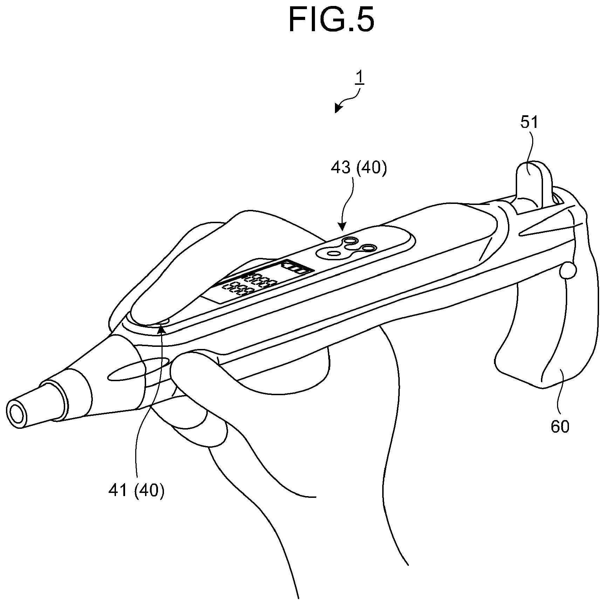

Because the first push button 41 is provided on the side near the tip end, as illustrated in FIG. 5 illustrating how the dispensing device 1 is used, when the operator holds the dispensing device 1 as if the operator holds a pen, the first push button 41 comes to the position of the tip of his/her index finger. Therefore, an operator can aspirate and dispense (aliquot-dispenses) fluid by holding the dispensing device 1, as if holding a pen, and pressing down the first push button 41 with his/her index finger.

The mobile terminal device 2 will now be explained with reference to FIG. 4. The mobile terminal device 2 includes a control unit 2a serving as a second control unit, a display operation unit 2b, a wireless communicating unit 2c that is a second wireless communicating unit, a sound synthesizing unit 2d, and a sound output unit 2e.

The mobile terminal device 2 includes a CPU, and a RAM and a ROM serving as storage units. Various functions of the mobile terminal device 2 are implemented as software by causing the CPU to read various computer programs from the ROM onto the RAM, and to execute the computer programs using the RAM as a working area.

The control unit 2a controls the functional units, such as the display operation unit 2b, the wireless communicating unit 2c, the sound synthesizing unit 2d, and the sound output unit 2e, included in the mobile terminal device 2. The functions of the control unit 2a are implemented as functions executed by the CPU, for example.

The display operation unit 2b includes, for example, a liquid crystal display device or an organic electroluminescent (EL) display device having a touch panel function.

The wireless communicating unit 2c is for performing wireless communication between the control unit 2a and the dispensing device 1. The wireless communicating unit 2c is a communication interface for performing near-field wireless communication with the dispensing device 1, and is a communication interface such as a Bluetooth interface.

The sound synthesizing unit 2d generates information on a setting or the like of the dispensing device 1 as a synthetic sound, for example. The function of the sound synthesizing unit 2d is implemented as a function executed by the CPU, for example, but may also be implemented as hardware designed for sound synthesis.

The sound output unit 2e is for outputting the synthetic sound generated by the sound synthesizing unit 2d, and implemented as a sound output device such as a speaker.

An operator can control the dispensing device 1 using application software installed on the mobile terminal device 2. For example, an operator can make operations, such as operations for entering an operation mode setting of the dispensing device 1, for entering inputs such as the inputs of settings, for causing the settings to be read aloud, and for editing supplementary information that is to be stored as the history information together with the operation history information, for example, using the application software. Examples of the settings include a dispense volume setting, and an aspiration speed setting or a dispense speed setting. In the multi-mode, the settings to be used include a setting of the number of times to be dispensed in the aliquot dispense. Examples of the supplementary information include operator-specific information such as the name or an ID number of an operator, and used-fluid-specific information, such as the name of the used fluid.

To perform the various types of operations described above, an operator can change the display mode of the display operation unit 2b, by operating the operation keys that are provided on a main screen that the control unit 2a displays on the display screen of the display operation unit 2b. In response to the operator making an operation of the operation key, the control unit 2a displays various indications that are required for making the various operations, onto the display screen of the display operation unit 2b.

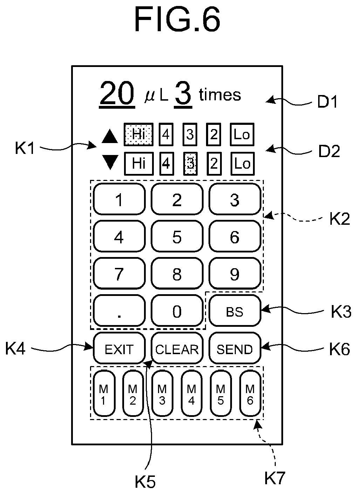

FIG. 6 is a schematic for explaining a display screen (setting input screen) for the mobile terminal device 2 in a setting input mode that is for making input operations, such as an operation for entering a setting. As illustrated in FIG. 6, when an operator is intended to make an input operation, such as an operation for entering a setting, the control unit 2a displays setting indications D1, speed setting keys K1, speed indications D2, a numeric key pad K2, a back space (BS) key K3, an exit (EXIT) key K4, a clear (CLEAR) key K5, a send (SEND) key K6, and memory keys K7 on the touch panel screen of the display operation unit 2b. The operator can operate these keys by touching with a finger or a stylus.

The setting indications D1 are indications of the settings of the dispense volume and the number of times to be dispensed. The unit "µL" for the dispense volume, and the "times" indicating the number of times always remain displayed in the setting input mode, and the numeric values entered by the operations of the numeric key pad K2 or the memory keys K7, in a manner corresponding to the dispense volume and the number of times, respectively, are displayed as the underlined numbers. In the example illustrated, the dispense volume is 20µL, and the number of times to be dispensed is three. The setting indications D1 illustrated are an example in which the operation mode of the dispensing device 1 is the multi-mode. When the operation mode is the single mode, the numeric value of the number of times to be dispensed and the "times" are not displayed.

The speed setting keys K1 are operation keys for setting the aspiration speed and the dispense speed, and the speed indications D2 are indications of the settings. The top row is a part for setting and displaying the aspiration speed, and the bottom row is a part for setting and displaying the dispense speed. In the speed setting keys K1, the indication of the black triangle symbol is an operation key for setting the aspiration speed. Every time the indication is touched, one of the speed-level indication characters "Hi", "4", "3", "2", and "Lo" in the top row of the speed indications D2 becomes displayed in an emphasized manner, one after another. In the example illustrated, "Hi" is displayed in an emphasized manner. In the same manner, the indication of the black reversed triangle symbol included in the speed setting keys K1 is an operation key for setting the dispense speed. Every time the indication is touched, the speed-level indication characters "Hi", "4", "3", "2", and "Lo" in the bottom row of the speed indications D2 become displayed in an emphasized manner, one after another. In the example illustrated, "3" is displayed in an emphasized manner. These speed-level indication characters representing information on the speed settings are preassigned with predetermined aspiration or dispense speeds decreasing in the order of "Hi", "4", "3", "2", and "Lo". In response to an operation of the speed setting keys K1, the aspiration speed and the dispense speed corresponding to the speed-level indication characters that are displayed in an emphasized manner are set to the dispensing device 1. In the example illustrated, the aspiration speed is set to the speed corresponding to "Hi", and the dispense speed is set to the speed corresponding to "3". The information on the speed-level indication characters and the information on the speeds are stored in the storage unit included in the control unit 2a.

The numeric key pad K2 includes numeric keys "0" to "9" and a decimal point key ".". The numeric key pad K2 has operation keys that are used for entering settings of the dispense volume and the number of times to be dispensed, both of which are displayed as the setting indications D1. The back space key K3 is an operation key used for deleting the numeric values in the setting indications D1, one character at a time. The exit key K4 is an operation key used for ending the setting input mode. The clear key K5 is an operation key used for deleting the entire numeric values in the setting indications D1, all at once. The send key K6 is an operation key for transmitting and setting the dispense volume setting and the setting of the number of times to be dispensed in the setting indications D1, and the information on the aspiration speed and the dispense speed corresponding to the speed-level indication characters that are displayed in a manner emphasized in the speed indications D2, to the dispensing device 1.

The memory keys K7 include six memory keys. A combination of predetermined aspiration speed setting, dispense speed setting, dispense volume setting, and setting of the number of times to be dispensed is preassigned to each of the memory keys. When a memory key is touched, the settings included in the combination of the settings assigned to the memory key (for the aspiration speed and dispense speed, the speed-level indication characters that represent the information on the settings and to which speeds are assigned) are displayed as the setting indications D1 and the speed indications D2. The information on the setting combination corresponding to each of the memory keys is stored in the storage unit (setting storage unit) included in the control unit 2a. If the control unit 2a determines that one of the memory keys is operated, the control unit 2a reads the combination of the settings corresponding to the operated memory key from the storage unit, and displays the settings and the information on the settings onto the display operation unit 2b.

As illustrated in FIG. 6, the display operation unit 2b displays the dispense volume setting and the numeric key pad K2 for entering the dispense volume setting, simultaneously on the same screen. In this manner, the operator can check the entered setting, as the operator enters the setting. Furthermore, because the operator uses the numeric key pad K2 to enter the settings, the operator is not required to press the push buttons many times, or to keep pressing the push buttons, in an attempt to increment or to decrement the setting, which is required with the operation button 43 on the dispensing device 1, for example. Therefore, the ease of setting is improved. Furthermore, because the operator can perform the setting operation easily even with the use of a non-dominant hand, the operator can perform the setting operation using his/her non-dominant hand, while holding the dispensing device 1 with his/her dominant hand. As a result, the workability and the efficiency of dispense volume setting can be improved, and the accuracy and the easiness of pipetting can be improved.

Furthermore, in the embodiment, because the display operation unit 2b displays the setting of the number of times to be dispensed, the speed-level indication characters representing the information on the aspiration speed setting or the dispense speed setting, and the dispense volume setting, simultaneously on the same screen, the workability and the efficiency of dispense volume setting are further improved. Therefore, the accuracy and the easiness of pipetting can be improved further.

Furthermore, in the embodiment, the settings stored in advance can be read all at once, through the operation of the memory keys K7. Therefore, by storing the combinations of settings that are used relatively frequently, for example, the workability and the efficiency of dispense volume setting are further improved, and therefore, the accuracy and the easiness of pipetting can be further improved. Furthermore, in the embodiment, because the display operation unit 2b displays the setting indications D1, the speed indications D2, and the memory keys K7 simultaneously on the same screen, the workability and the efficiency of dispense volume setting are further improved. Therefore, the accuracy and the easiness of pipetting can be improved further.

Furthermore, in the embodiment, the control unit 2a can also cause the sound synthesizing unit 2d to generate at least the dispense volume setting as a synthetic sound, and cause the sound output unit 2e to output the generated synthetic sound. In this manner, the operator can double-check the dispense volume setting, visually and aurally, via the display on the display operation unit 2b and the synthetic sound, to allow the operator to further focus on the operation of the dispensing device 1. Therefore, the workability and the efficiency of dispense volume setting are further improved, and the accuracy and the easiness of pipetting can be improved further. The setting of the number of times to be dispensed, and the information on the aspiration speed setting and the dispense speed setting may be generated as synthetic sounds, and the synthetic sounds may be output, in addition to the dispense volume setting. In the embodiment, the generation and the output of the synthetic sound are triggered by a touching operation of the operation keys, such as the send key K6 displayed on the display operation unit 2b. An operator can therefore check the setting via the sound at any timing, by selecting the timing for touching the send key K6.

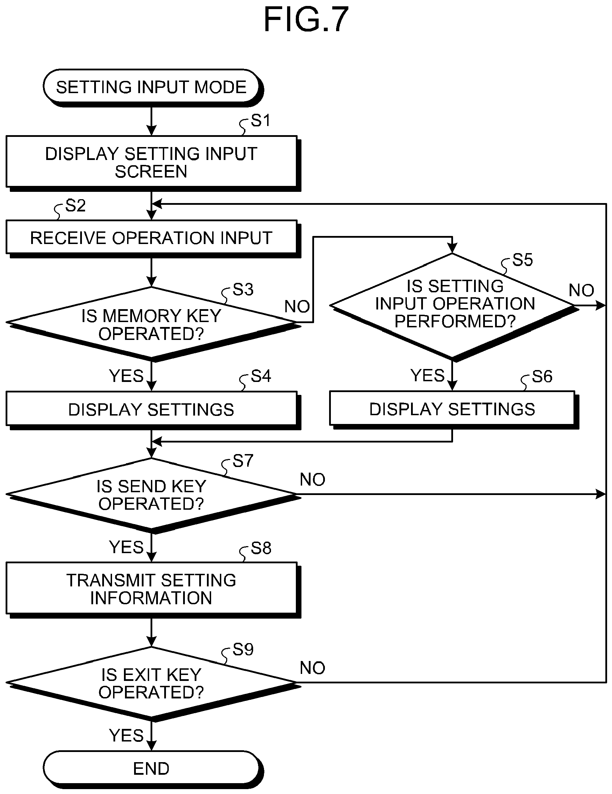

FIG. 7 is a flowchart for explaining the control performed by the control unit 2a in the setting input mode. This control is for a computer program to cause the mobile terminal device 2 to execute an operation of causing the CPU in the mobile terminal device 2 to read the computer program from the ROM onto the RAM, and to execute the computer program using the RAM as a working area.

To begin with, at Step S1, the control unit 2a displays the setting input screen illustrated in FIG. 6 onto the touch panel screen of the display operation unit 2b. At Step S2, the control unit 2a then receives an operation input performed by an operator.

At Step S3, the control unit 2a determines whether any of the memory keys K7 has been operated. If the control unit 2a determines that any one of the memory keys K7 has been operated (Yes at Step S3), the control unit 2a reads the information on the combination of the settings corresponding to the memory key determined to have been operated, and displays the settings on the display operation unit 2b, as the setting indications D1 and the speed indications D2 (Step S4). Specifically, the control unit 2a displays the speed-level indication characters corresponding to the aspiration speed and the dispense speed in an emphasized manner, and displays the numeric values for the dispense volume and the number of times to be dispensed.

At Step S3, if the control unit 2a determines that none of the memory keys K7 has been operated (No at Step S3), the control unit 2a determines whether setting input operations have been performed using the speed setting keys K1 and the numeric key pad K2 (Step S5). If the control unit 2a determines that some setting input operations have been performed using the speed setting keys K1 and the numeric key pad K2 (Yes at Step S5), the control unit 2a displays the input setting on the display operation unit 2b, as the setting indication D1 and the speed indication D2 (Step S6). If the control unit 2a determines that no setting input operation has been performed using the speed setting keys K1 and the numeric key pad K2 (No at Step S5), the process is returned to Step S2.

Subsequent to executing the displaying at Step S4 or Step S6, the control unit 2a determines whether the send key K6 has been operated at Step S7. If the control unit 2a determines that the send key K6 has been operated (Yes at Step S7), the control unit 2a executes transmitting at which the wireless communicating unit 2c transmits a wireless signal including the setting information (Step S8). The wireless communication unit 70 receives the wireless signal from the wireless communicating unit 2c, and the control circuit unit 80 controls to drive the rotating actuator 31 based on the setting information included in the received wireless signal. If the control unit 2a determines that the send key K6 has not been operated (No at Step S7), the process is returned to Step S2.

Subsequent to the execution of Step S8, the control unit 2a determines whether the exit key K4 has been operated at Step S9. If the control unit 2a determines that the exit key K4 is operated (Yes at Step S9), the control unit 2a ends this control process. If the control unit 2a determines that the exit key K4 has not been operated (No at Step S9), the process is returned to Step S2.

After the dispensing operation of the dispensing device 1 is completed, the control circuit unit 80 causes the wireless communication unit 70 to transmit the operation history information stored in the memory, via a wireless signal. The control unit 2a then causes the wireless communicating unit 2c to receive the wireless signal and store the operation history information included in the wireless signal in the storage unit.

While an operator can enter the settings and the like in the setting input mode described above, the operator can also change the display mode of the display operation unit 2b to a history information editing mode for editing supplementary information that the operator desires to be stored with the operation history information, by operating the operation keys on the main screen. The control unit 2a displays a display of the history information editing mode on the display screen of the display operation unit 2b, in response to an operation of the operation key, performed by the operator.

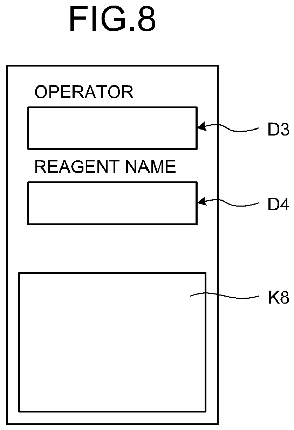

FIG. 8 is a schematic for explaining the display screen (editing screen) of the mobile terminal device 2 in the history information editing mode. As illustrated in FIG. 8, in the history information editing mode, the control unit 2a displays an operator-specific information editing area indication D3, a used-fluid-specific information editing area indication D4, and edit keys K8 on the touch panel screen of the display operation unit 2b. The edit key K8 includes, for example, character keys, numeric keys, a delete key such as a BS keys, and an OK for committing the input. An operator can edit and enter the operator-specific information, or the used-fluid-(reagent-) specific information, using the edit key K8. By allowing such supplementary information to be stored in a manner included in the history information, the reproducibility of experiments can be improved, or frauds in experiments can be prevented. The input information is stored in the storage unit of the control unit 2a (operation history storage unit) when the OK included in the edit keys K8 is operated.

In the embodiment described above, the mobile terminal device 2 is provided with the sound synthesizing unit 2d and the sound output unit 2e, but the sound synthesizing unit and the sound output unit may be provided to the dispensing device 1. When the sound synthesizing unit and the sound output unit are provided to the dispensing device 1, the dispensing device 1 may be caused to generate and output the synthetic sound when a push button for determining the setting, included in the operation button 43, is pressed. Alternatively, another push button for outputting the synthetic sound may be included in the operation buttons 43, or may be provided to another location of the dispensing device 1.

Furthermore, in the embodiment described above, the display operation unit 2b displays the setting of the number of times to be dispensed, the speed-level indication characters that are the information on the aspiration speed setting and the dispense speed setting, and the dispense volume setting, simultaneously on the same screen, but the setting of the number of times to be dispensed and the speed-level indication characters may be displayed on a different screen from the screen on which the dispense volume setting is displayed.

Furthermore, in the embodiment described above, the speed-level indication characters indicating the aspiration speed and the dispense speed are presented as speed information, but the aspiration speed and the dispense speed may also be presented as numeric values.

According to the present invention, the accuracy and the easiness of the dispensing process can be improved at the same time.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A mobile terminal device (2) comprising:
a display operation unit (2b) configured to display, simultaneously on a screen, a setting including a dispense volume setting of a dispensing device (1) for aspirating and dispensing fluid by driving of an actuator (30), and a numeric key pad (K2) for entering the setting;
a second wireless communicating unit (2c) configured to transmit information on the setting to a first wireless communicating unit (70) included in the dispensing device (1); and
a control unit (2a) configured to control the display operation unit (2b) and the second wireless communicating unit (2c).

2. The mobile terminal device according to claim 1, wherein the display operation unit (2b) is configured to display: a setting of number of times to be dispensed by the dispensing device (1); and an aspiration speed setting or a dispense speed setting of the dispensing device (1).

3. The mobile terminal device according to claim 1 or 2, further comprising a setting storage unit configured to store therein a combination of settings including at least the dispense volume setting, and an aspiration speed setting or a dispense speed setting, wherein
the display operation unit (2b) is configured to display a memory key (K7) for displaying the combination of the settings on the screen, and
the second wireless communicating unit (2c) is configured to transmit information on the settings included in the combination, to the first wireless communicating unit (70).

4. The mobile terminal device according to claim 3, wherein the combination of the settings further includes a setting of number of times to be dispensed by the dispensing device (1).

5. The mobile terminal device according to claim 3 or 4, wherein the display operation unit (2b) is configured to display, simultaneously on the screen, information on the settings included in the combination of the settings, and the memory key (K7).

6. The mobile terminal device according to any one of claims 1 to 5, further comprising:
a sound synthesizing unit (2d) configured to generate at least the dispense volume setting as a synthetic sound; and
a sound output unit (2e) configured to output the synthetic sound.

7. The mobile terminal device according to claim 6, wherein the display operation unit (2b) is configured to display an operation key (K6) for executing generation and output of the synthetic sound.

8. The mobile terminal device according to any one of claims 1 to 7, further comprising an operation history storage unit configured to store therein information on an operation history of the dispensing device (1), wherein
the second wireless communicating unit (2c) is configured to receive the information on the operation history from the first wireless communicating unit (70).

9. A computer program causing a mobile terminal device (2) including a display operation unit (2b) and a wireless communicating unit (2c) to execute:
displaying, simultaneously on a screen, a setting including a dispense volume setting of a dispensing device (1) for aspirating and dispensing fluid by driving of an actuator, and a numeric key pad (K2) for entering the setting; and
transmitting information on the setting to a first wireless communicating unit (70) included in the dispensing device (1).
